# EUROPÄISCHE PATENTSCHRIFT

(11) **EP 3 229 526 B1**
(45) Veröffentlichungstag und Bekanntmachung des Hinweises auf die Patenterteilung: **24.07.2019**
(21) Anmeldenummer: 16164071.9
(22) Anmeldetag: 06.04.2016
(51) Int. Cl.: H04W 28/16, H04W 72/08

(54) **STEUERUNG VON KOMMUNIKATIONSRESSOURCEN IN EINEM KOMMUNIKATIONSNETZWERK**
CONTROL OF COMMUNICATION RESOURCES IN A COMMUNICATION NETWORK
COMMANDE DE RESSOURCES DE COMMUNICATION DANS UN RÉSEAU DE COMMUNICATION

(43) Veröffentlichungstag der Anmeldung: 11.10.2017
(73) Patentinhaber: Deutsche Telekom AG, 53113 Bonn (DE)
(72) Erfinder: ARNOLD, Paul, 60389 Frankfurt am Main (DE); BELSCHNER, Jakob, 60322 Frankfurt (DE); KADEL, Gerhard, 64293 Darmstadt (DE)
(74) Vertreter: Patentship Patentanwaltsgesellschaft mbH

(56) Entgegenhaltungen:
- EP-A1- 2 677 830
- US-A1- 2008 162 713
- US-A1- 2011 125 905

## Beschreibung

Die vorliegende Erfindung betrifft die Steuerung von Kommunikationsressourcen in einem Kommunikationsnetzwerk mit voneinander getrennten Subnetzwerken, beispielsweise Slices eines 5G-Kommunikationsneetzwerks.

In modernen Kommunikationsnetzwerken ist die Dienstgüte (Quality of Service) ein wichtiger Faktor zur Beurteilung der Leistungsfähigkeit einer Kommunikationstechnologie.

In LTE-Kommunikationssystemen ist die Dienstgüte im Rahmen des 3GPP-Standards beschrieben. Gemäß 3GPP14-23203 ist die Dienstgüte benutzerspezifisch in Abhängigkeit von Dienstgüteparametern wie Durchsatz, Latenz, Bitfehlerrate definiert. Diese Dienstgüteparameter werden beispielswiese in einer Basisstation wie eNodeB in einem LTE-Netzwerk benutzt, um beispielsweise das Scheduling der Daten eines Benutzers zu bestimmen, bei dem die geforderte Dienstgüte sichergestellt wird.

Die Offenlegungsschrift US 2011/125905 A1 zeigt einen Slice-Manager zum Verwalten von Slices mittels Anfragen an Basistationen.

Die Offenlegungsschrift EP 2 677 830 A1 zeigt Umformen von abstrakten virtuellen Ressourcen in Funkzugangsressourcen zwischen einem virtuellen Scheduler und einem Scheduler für drahtlose Ressourcen.

Die nachfolgenden Generationen der mobilen Technologien, beispielsweise die fünfte Generation der mobilen Technologie (5G), verändern jedoch die klassische Netzwerkarchitektur zugunsten von heterogenen Subnetzwerken, sog. Slices, welche logisch voneinander separiert sind. In 5G können insbesondere unterschiedliche Funkzugangstechnologien für die Kommunikation über die Slices verwendet werden.

Es ist die Aufgabe der vorliegenden Erfindung, ein effizientes Dienstgüte-Konzept in einem Kommunikationsnetzwerk mit heterogenen Subnetzwerken, welche über Funkzugangstechnologien erreichbar sind, zu schaffen.

Diese Aufgabe wird durch die Merkmale der unabhängigen Ansprüche gelöst. Vorteilhafte Weiterbildungsformen der Erfindung sind Gegenstand der Beschreibung, der abhängigen Ansprüche, sowie der Figuren.

Die vorliegende Erfindung basiert auf der Erkenntnis, dass heterogene Subnetzwerke eines Kommunikationsnetzwerks, beispielsweise Slices eines 5G-Kommunikationsnetzwerks, Dienstgüteklassen zugeordnet werden können, welche für das jeweilige Subnetzwerk an sich gelten. Diese Dienstgüteklassen sind Subnetzwerken des Kommunikationsnetzwerks zugeordnet. Die Subnetzwerke sind beispielsweise für unterschiedliche Dienste vorgesehen und führen daher dienstspezifische Datenströme mit Dienstgüteklassen, welche gemäß Dienstgütevereinbarungen vorgesehen sind. Daher können unterschiedlichen Subnetzwerken desselben Kommunikationsnetzwerks unterschiedliche Dienstgüteklassen zugeordnet werden. Darüber hinaus können innerhalb eines Subnetzwerks unterschiedliche Dienstgüteklassen für unterschiedliche Datenströme vorgesehen oder vereinbart werden. Die Dienstgüteklassen können beispielsweise die Mindestanforderungen an Dienstgüte definieren, welche einzuhalten sind, beispielsweise zu 95% der Übertragungszeit. Daher können über die Subnetzwerke auch Datenströme mit höheren Dienstgüteklassen als die zumindest vereinbarte Dienstgüteklasse für das jeweilige Subnetzwerk geführt werden. Im Allgemeinen kann das jeweilige Subnetzwerk mehrere Datenströme mit einer oder unterschiedlichen Dienstklassen führen, wobei die für das jeweilige Subnetzwerk vereinbarte Dienstgüteklasse die niedrigste Dienstgüteklasse ist. Mit zunehmender Dienstgüteklasse nimmt auch die Dienstgüte zu. Die Dienstgüteklassen können sich beispielsweise in Datenrate, Bandbreite, Latenzzeit oder Bit- bzw. Blockfehlerrate unterscheiden.

Zur Einhaltung der Dienstgüteklassen in den Subnetzwerken wird die Vergabe der Kommunikationsressourcen, wie beispielsweise Zeit und/oder Frequenzressourcen in beispielsweise einem OFMDA-System, gesteuert. Hierbei können einem Subnetzwerk, beispielsweise Slice, Funkzugangseinheiten Abhängigkeit von einer Dienstgüteklasse Kommunikationsressourcen bereitgestellt werden, um die dem Subnetzwerk zugewiesene Dienstgüteklasse zu gewährleisten.

Der Funkzugang kann beispielsweise mittels Funkzugangseinheiten wie Remote Radio Units (RRH) erfolgen, welche eine Funkschnittstelle zu den mobilen Endgeräten bilden. Die Funkzugangseinheiten sind in einem Kommunikationsnetzwerk beispielsweise über Glasfaser mit einer Kommunikationsanordnung verbunden, welche die Datenverkehre auf die Subnetzwerke, insbesondere in Abhängigkeit von den Dienstgüteklassen, verteilt.

Die Funkzugangseinheiten können im Allgemeinen gleiche und/oder unterschiedliche Funkzugangstechnologien implementieren. Ferner kann eine Funkzugangseinheit für den Funkzugang für ein oder mehrere mobile Endgeräte vorgesehen sein.

Gemäß einem ersten Aspekt betrifft die Erfindung eine Kommunikationsanordnung zur Steuerung von Kommunikationsressourcen in einem Kommunikationsnetzwerk, wobei das Kommunikationsnetzwerk eine Mehrzahl von Subnetzwerken mit einem ersten Subnetzwerk und mit einem Subnetzwerk aufweist, wobei jedem Subnetzwerk eine vorgegebene Dienstgüteklasse gemäß einer Dienstgütevereinbarung zugeordnet ist, mit: einer Mehrzahl von steuerbaren Basisbandeinheiten für Kommunikationen über die Subnetzwerke mit den Dienstgüteklassen, welche den Subnetzwerken zugeordnet sind, wobei jede Basisbandeinheit steuerbare Kommunikationsressourcen aufweist; und einem zentralen Dienstgütemanager, welcher ausgebildet ist, die Kommunikationsressourcen der Mehrzahl der Basisbandeinheiten gemäß den Dienstgüteklassen der Subnetzwerke zu steuern.

Die Basisbandeinheiten (Baseband Units, BBU) sind für Basisbandverarbeitung und Verteilung der Datenverkehre auf die Subnetzwerke. Hierzu gehört Modulation und Demodulation, Routing oder Filterung. Zur Einhaltung der Dienstgüteklassen werden die steuerbaren Kommunikationsressourcen der jeweiligen Basisbandeinheit gesteuert. Auf diese Weise können einem Subnetzwerk und/oder einem Datenverkehr zusätzliche Kommunikationsressourcen zugewiesen werden oder es kann eine andere Basisbandeinheit ausgewählt werden.

Die für ein Subnetzwerk vereinbarte Dienstgüteklasse kann gemäß einer Ausführungsform als die Mindest-Dienstgüteklasse verstanden werden, mit welcher ein oder mehrere Datenverkehre geführt werden.

Für ein Subnetzwerk können gemäß einer Ausführungsform eine oder mehrere Dienstgüteklassen vereinbart sein und dem jeweiligen Subnetzwerk zugeordnet sein. Die Dienstgüteklassen können beispielsweise unterschiedliche Dienstgütequalitäten für unterschiedliche Datenströme oder Services angeben, wie beispielsweise Best-Effort-Service mit einer geringeren Dienstgüte oder eine Ultra-Reliable-Communication mit einer höheren Dienstgüte.

Die Angabe über die Dienstgüteklasse kann die jeweilige Dienstgüteklasse spezifizieren. Die Angabe kann beispielsweise eine QoS-Identifier aufweisen, welcher auf eine Dienstgüte (QoS, Quality of Service) hinweist.

Die Subnetzwerke können unterschiedliche Services bereitstellen. So kann ein erstes Subnetzwerl ein LTE-Subnetzwerk mit einer Dienstgüteklasse, ein weiteres Subnetzwerk kann ein MTC(Machine Type Communication)-Subnetzwerk mit einer oder mehreren Dienstgüteklassen, und ein weiteres Subnetzwerk kann ein Car-to-X-Subnetzwerk sein, welches zwei Dienstgüteklassen unterstützt, wie beispielsweise Best Effort oder Ultra-Reliable-Communication.

Gemäß einer Ausführungsform sind in dem Kommunikationsnetzwerk verteilte Funkzugangseinheiten, insbesondere Remote Radio Units, RRU, für einen Funkzugang von mobilen Endgeräten zu dem Kommunikationsnetzwerk angeordnet, und wobei das Kommunikationssystem eine Kommunikationsschnittstelle für eine Kommunikation zwischen den verteilten Funkzugangseinheiten und den steuerbaren Basisbandeinheiten aufweist.

Gemäß einer Ausführungsform ist die Kommunikationsschnittstelle eine Funkschnittstelle oder eine optische Schnittstelle, an welche zumindest eine Glasfaser anschließbar ist.

Gemäß einer Ausführungsform ist der zentrale Dienstgütemanager ausgebildet, einen Ressourcenparameter an zumindest eine steuerbare Basisbandeinheit zu übermitteln, wobei der Ressourcenparameter zumindest eine Kommunikationsressource für eine Dienstgüteklasse des ersten Subnetzwerks definiert, und wobei die steuerbare Basisbandeinheit ausgebildet ist, die Kommunikationsressource gemäß dem Ressourcenparameter für eine Kommunikation über das Subnetzwerk bereitzustellen.

Gemäß einer Ausführungsform wählt der zentrale Dienstgütemanager denjenigen Ressourcenparameter aus, welcher der jeweiligen Dienstgüteklasse zugeordnet ist.

Gemäß einer Ausführungsform sind in dem Kommunikationsnetzwerk verteilte Funkzugangseinheiten, beispielsweise RRUs, für einen Funkzugang von mobilen Endgeräten zu dem Kommunikationsnetzwerk angeordnet, wobei der zentrale Dienstgütemanager ausgebildet ist, Funkzugangsressourcen, insbesondere Bandbreite, Anzahl von Frequenz-/Zeitressourcen, Anordnung von Frequenz-/Zeitressourcen, der Funkzugangseinheiten zu steuern.

Gemäß einer Ausführungsform ist der zentrale Dienstgütemanager oder zumindest eine der Basisbandeinheiten ausgebildet, ein Steuersignal an zumindest eine der Funkzugangseinheiten zu übermitteln, um die Funkzugangseinheit zu steuern, wobei der Ressourcenparameter zumindest eine der folgenden Funkzugangsressourcen definiert: Anzahl und/oder Zeit- und/oder Frequenzlage von Frequenz- und/oder Zeitressourcen für ein Subnetzwerk, Anzahl und/oder Zeit- und/oder Frequenzlage von Frequenz und/oder Zeitressourcen für ein mobiles Endgerät, Bandbreite, Latenzzeit, Datenrate.

Gemäß einer Ausführungsform umfassen die Kommunikationsressourcen zumindest eine der folgenden Kommunikationsressourcen umfassen: Bandbreite, Frequenzspektrum, Zeitressourcen, insbesondere Anzahl von Übertragungsrahmen, Anzahl und/oder Zeitlage von Zeitschlitzen, Sendeleistung, Datenrate, Bitfehlerrate, Blockfehlerrate, Latenzzeit.

Gemäß einer Ausführungsform ist der zentrale Dienstgütemanager ausgebildet, eine Basisbandeinheit für eine Kommunikationsverbindung des ersten Subnetzwerks mit der Dienstgüteklasse des ersten Subnetzwerks aus der Mehrzahl von Basisbandeinheiten in Abhängigkeit von einem Optimierungsparameter auszuwählen.

Der Optimierungsparameter kann beispielsweise diejenige Basisbandeinheit anzeigen, welche für einen bestimmten Service oder Datenstrom geeigneter als eine andere Technologie ist.

Der Optimierungsparameter kann ferner zumindest einer der folgenden Optimierungsparameter sein: Verfügbarkeit von Kommunikationsressourcen der für die jeweilige Kommunikationsverbindung oder Datenverkehr mit der jeweiligen Dienstgüteklasse, Lastausgleich, insbesondere Load Balancing, unter den Basisbandeinheiten, Auswahl einer Basisbandeinheit mit den geringsten Kommunikationsressourcen, welche die jeweilige Dienstgüteklasse erfüllen, Auswahl einer Basisbandeinheit zur zusätzlichen Erfüllung von Dienstgüteanforderungen an einen Datenstrom, Service und/oder Benutzer.

Gemäß einer Ausführungsform ist pro Dienstgüteklasse eine Dienstgütevereinbarung geschlossen.

Gemäß einer Ausführungsform entsprechen die Dienstgüteklassen den QCI-Klassen (QCI: QoS Class Identifier), beispielsweise eines LTE-Kommunikationssystems.

Gemäß einer Ausführungsform sind in dem Kommunikationsnetzwerk verteilte Funkzugangseinheiten für einen Funkzugang von mobilen Endgeräten zu dem Kommunikationsnetzwerk angeordnet, und wobei der zentrale Dienstgütemanager ausgebildet ist, eine Funkzugangseinheit für eine Kommunikationsverbindung des ersten Subnetzwerks mit der Dienstgüteklasse des ersten Subnetzwerks in Abhängigkeit von einem Optimierungsparameter auszuwählen.

Der Optimierungsparameter kann zumindest einer der folgenden Optimierungsparameter sein: Verfügbarkeit von Funkzugangsressourcen der für die jeweilige Kommunikationsverbindung oder Datenverkehr mit der jeweiligen Dienstgüteklasse, Lastausgleich, insbesondere Load Balancing, unter den Funkzugangseinheiten, Auswahl einer Funkzugangseinheit mit den geringsten Funkzugangsressourcen, welche die jeweilige Dienstgüteklasse erfüllen, Auswahl einer Funkzugangseinheit zur zusätzlichen Erfüllung von Dienstgüteanforderungen an einen Datenstrom, Service und/oder Benutzer.

Die Funkzugangsressourcen können physikalisch den Kommunikationsressourcen entsprechen.

Gemäß einer Ausführungsform ist der zentrale Dienstgütemanager ausgebildet, eine Übergabe der Kommunikationsverbindung des ersten Subnetzwerks von einer ersten Basisbandeinheit zu einer zweiten Basisbandeinheit der Mehrzahl der Basisbandeinheiten in Abhängigkeit von einem Optimierungsparameter zu initiieren.

Gemäß einer Ausführungsform umfasst der Optimierungsparameter zumindest einer der Optimierungsparameter ist: Verfügbarkeit von Kommunikationsressourcen und/oder Verarbeitungsressourcen der Basisbandeinheiten für die jeweilige Kommunikationsverbindung mit der jeweiligen Dienstgüteklasse, Verfügbarkeit von Funkzugangsressourcen und/oder Datenverarbeitungsressourcen von Funkzugangseinheiten für die jeweilige Kommunikationsverbindung mit der jeweiligen Dienstgüteklasse, Lastausgleich unter den Basisbandeinheiten oder unter Funkzugangseinheiten, Auswahl einer Basisbandeinheit mit den geringsten Kommunikationsressourcen, welche die jeweilige Dienstgüteklasse erfüllen, Auswahl einer Funkzugangseinheit mit den geringsten Funkzugangsressourcen, welche die jeweilige Dienstgüteklasse erfüllen, zulässige Degradierung einer Dienstgüteklasse gemäß der Dienstgütevereinbarung, Dienstgüteanforderungen an einen Datenstrom eines Benutzers.

Gemäß einer Ausführungsform initiiert der zentrale Dienstgütemanager die Übergabe der Kommunikationsverbindung, falls die erste Basisbandeinheit nicht genügend Kommunikationsressourcen für die Kommunikationsverbindung über das erste Subnetzwerk mit der Dienstgüteklasse des ersten Subnetzwerks bereitstellen kann.

Gemäß einer Ausführungsform ist der zentrale Dienstgütemanager ferner ausgebildet, die Kommunikationsressourcen der Mehrzahl der Basisbandeinheiten gemäß den Dienstgüteklassen der Subnetzwerke und Dienstgüteklassen von Datenströmen von Benutzern zu steuern.

Gemäß einer Ausführungsform ist der zentrale Dienstgütemanager ausgebildet, einer ersten Basisbandeinheit Verarbeitungsressourcen einer zweiten Basisbandeinheit für eine Kommunikation des ersten Subnetzwerks mit der Dienstgüteklasse des ersten Subnetzwerks zuzuweisen.

Gemäß einer Ausführungsform umfasst die Kommunikationsanordnung ferner eine Kommunikationsschnittstelle, insbesondere eine optische Kommunikationsschnittstelle, für die Kommunikation zwischen den Basisbandeinheiten und den Subnetzwerken aufweist.

Gemäß einer Ausführungsform sind die Basisbandeinheiten ausgebildet, einen eingehenden Kommunikationsverkehr auf die Subnetzwerke zu verteilen.

Gemäß einer Ausführungsform sind die Basisbandeinheiten ausgebildet, unterschiedliche Kommunikationstechnologien zu unterstützen, insbesondere LTE, WLAN, UMTS, GSM, 5G, und Kommunikationstechnologien für Machine Type Communication (MTC).

Gemäß einem zweiten Aspekt betrifft die Erfindung ein Kommunikationssystem, mit der Kommunikationsanordnung nach dem ersten Aspekt; und einer Mehrzahl von verteilten Funkzugangseinheiten für Weiterleitung von Kommunikationssignalen von mobilen Endgeräten zu der Kommunikationsanordnung, wobei die Mehrzahl von Funkzugangseinheiten mit der Kommunikationsanordnung über eine optische Übertragungsstrecke verbindbar ist.

Gemäß einer Ausführungsform weist der zentrale Dienstgütemanager eine Datenbank mit Dienstgüteklassen für die Subnetzwerke auf.

Gemäß einer Ausführungsform ist das Kommunikationsnetzwerk ein Kommunikationssetzwerk zumindest der fünften (5G) Generation ist, und wobei die Subnetzwerke Netzwerk-Slices.

Gemäß einer Ausführungsform sind die Subnetzwerke kommunikationstechnisch oder datentechnisch voneinander isoliert.

Weitere Ausführungsbeispiele werden Bezug nehmend auf die beiliegenden Zeichnungen erläutert. Es zeigen:
- Fig. 1: eine beispielhafte 5G-Systemarchitektur;
- Fig. 2: eine schematische Darstellung eines 5G-Kommunikationsnetzwerks; und
- Fig. 3: ein Kommunikationssystem.

Die im Folgenden vorgestellten Verfahren und Systeme können von verschiedener Art sein. Die einzelnen beschriebenen Elemente können durch Hardware- oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Die im Folgenden vorgestellten Geräte, Systeme und Verfahren sind dafür geeignet, Informationen über ein Kommunikationsnetzwerk zu übertragen. Der Begriff Kommunikationsnetzwerk oder Kommunikationsnetz bezeichnet dabei die technische Infrastruktur, auf der die Übertragung von Signalen stattfindet. Das Kommunikationsnetz umfasst im Wesentlichen das Vermittlungsnetz, in dem die Übertragung und Vermittlung der Signale zwischen den ortsfesten Einrichtungen und Plattformen des Mobilfunknetzes oder Festnetzes stattfinden, sowie das Funkzugangsnetz, in dem die Übertragung der Signale zwischen einer Netzwerkzugangseinrichtung und dem Kommunikationsendgerät stattfindet. Das Kommunikationsnetz kann hierbei sowohl Komponenten eines Mobilfunknetzes als auch Komponenten eines Festnetzes umfassen. Im Mobilfunknetz wird das Funkzugangsnetz auch als Luftschnittstelle bezeichnet und umfasst beispielsweise eine Basisstation (NodeB, eNodeB, Funkzelle) mit Mobilfunkantenne, um die Kommunikation zu einem Kommunikationsendgerät wie beispielsweise einem Mobiltelefon bzw. Smartphone oder einer mobilen Einrichtung mit Mobilfunkadapter aufzubauen. Im Festnetz umfasst das Funkzugangsnetz beispielsweise einen DSLAM (Digital Subscriber Line Access Multiplexer), um die Kommunikationsendgeräte mehrerer Teilnehmer draht- bzw. kabelgebunden anzuschließen. Über das Vermittlungsnetz kann die Kommunikation in weitere Netze, beispielsweise anderer Netzbetreiber, z.B. Auslandsnetze, weitervermittelt werden.

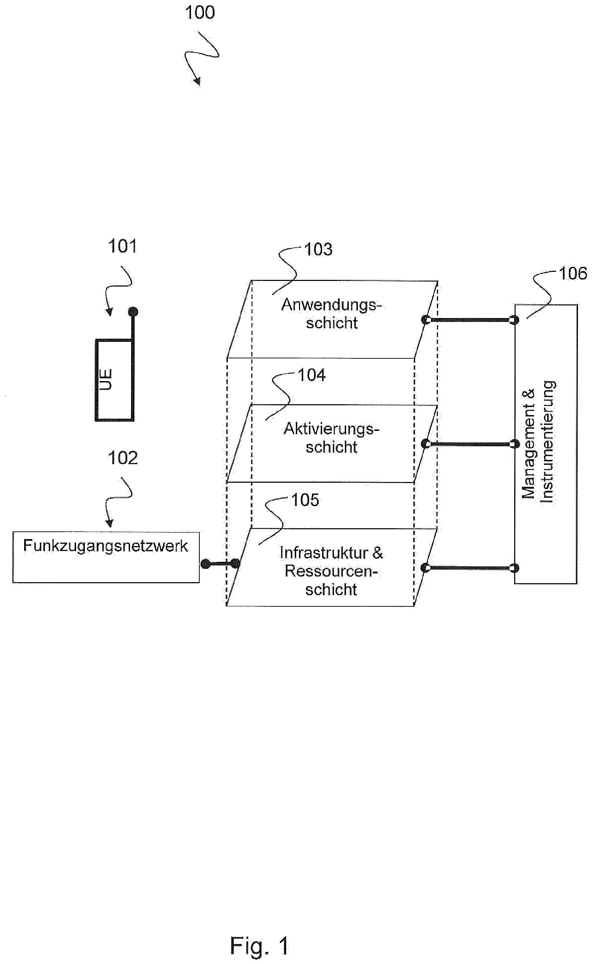

Die im Folgenden vorgestellten Geräte, Systeme und Verfahren sind dazu vorgesehen, die Kommunikation in Kommunikationsnetzen zu steigern, insbesondere in Kommunikationsnetzen gemäß der im Folgenden vorgestellten 5G Systemarchitektur. Fig. 1 zeigt eine schematische Darstellung einer solchen 5G Systemarchitektur 100. Die 5G Systemarchitektur 100 umfasst einen Bereich mit 5G Kommunikationsendgeräten 101, die über verschiedene Zugangstechnologien 102 mit einer mehrschichtigen Kommunikationsstruktur verbunden sind, welche eine Infrastruktur- & Ressourcenschicht 105, eine Aktivierungsschicht 104 und eine Anwendungsschicht 103 umfasst, die über eine Management- & Instrumentierungsebene 106 verwaltet werden.

Die Infrastruktur- & Ressourcenschicht 105 umfasst die physikalischen Ressourcen einer konvergenten Netzwerkstruktur aus Festnetz- und Mobilfunknetzkomponenten (sog. Fixed-Mobile Convergence) mit Zugangsknoten, Cloud-Knoten (bestehend aus Verarbeitungs- und Speicherknoten), 5G Geräten wie z.B. Mobiltelefonen, tragbaren Geräten, CPEs, Maschinenkommunikationsmodulen und anderen, Netzwerkknoten und zugehörigen Links. 5G Geräte können vielfältige und konfigurierbare Fähigkeiten umfassen und beispielsweise als Relay oder Hub agieren oder abhängig von dem jeweiligen Kontext als Computer/Speicher Ressource arbeiten. Diese Ressourcen werden den höheren Schichten 104, 103 und der Management- & Instrumentierungsebene 106 über entsprechend APIs (Anwendungsprogramm-Schnittstellen) zur Verfügung gestellt. Das Überwachen der Leistungsfähigkeit und der Konfigurationen sind inhärenter Teil solcher APIs.

Die Aktivierungsschicht 104 umfasst eine Bibliothek von Funktionen, die innerhalb eines konvergierten Netzwerks in Form von Bausteinen einer modularen Architektur benötigt werden. Diese umfassen Funktionen, die durch Softwaremodule realisiert werden, die von einem Aufbewahrungsort der gewünschten Lokation abgerufen werden können, und einen Satz von Konfigurationsparametern für bestimmte Teile des Netzwerks, z.B. den Funkzugang. Diese Funktionen und Fähigkeiten können auf Anforderung durch die Management- & Instrumentierungsebene 106 aufgerufen werden durch Nutzung der dafür vorgesehenen APIs. Für bestimmte Funktionen können mehrfache Varianten existieren, z.B. verschiedene Implementierungen derselben Funktionalität welche verschiedene Leistungsfähigkeit oder Charakteristik haben. Die verschiedenen Grade der Leistungsfähigkeit und der angebotenen Fähigkeiten können dazu verwendet werden, um die Netzwerkfunktionalitäten wesentlich weiter zu unterscheiden als es in heutigen Netzen möglich ist, z.B. als Mobilitätsfunktion eine nomadische Mobilität, eine Fahrzeugmobilität oder eine Luftverkehrsmobilität in Abhängigkeit der spezifischen Bedürfnisse anzubieten.

Die Anwendungsschicht 103 umfasst spezifische Anwendungen und Dienste des Netzwerkbetreibers, des Unternehmens, des vertikalen Operators oder von Drittparteien, die das 5G Netzwerk nutzen. Die Schnittstelle zu der Management- & Instrumentierungsebene 106 erlaubt zum Beispiel, bestimmte, d.h. dedizierte Netzwerk Slices (Netzwerkscheiben bzw. Subnetzwerke) für eine Anwendung aufzubauen, oder eine Anwendung einem existierenden Netzwerk Slice zuzuweisen.

Die Management- & Instrumentierungsebene 106 ist der Kontaktpunkt, um die geforderten Anwendungsfälle in tatsächliche Netzwerkfunktionen und Slices umzusetzen. Sie definiert die Netzwerk Slices für ein gegebenes Anwendungsszenario, verkettet die dafür relevanten modularen Netzwerkfunktionen, ordnet die relevanten Leistungsfähigkeitskonfigurationen zu und bildet alles auf die Ressourcen der Infrastruktur- & Ressourcenschicht 105 ab. Die Management- & Instrumentierungsebene 106 verwaltet auch die Skalierung der Kapazität dieser Funktionen als auch ihre geographische Verteilung. In bestimmten Anwendungsfällen kann sie auch Fähigkeiten aufweisen, die es Drittparteien erlauben, durch Nutzung der APIs ihre eigenen Netzwerk Slices zu erzeugen und zu verwalten. Aufgrund der vielzähligen Aufgaben der Management- & Instrumentierungsebene 106 handelt es sich dabei nicht um einen monolithischen Block von Funktionalität sondern vielmehr um eine Sammlung modularer Funktionen, die Fortschritte integrieren, die in verschiedenen Netzwerkdomänen erzielt wurden, wie beispielsweise NFV (Network Function Virtualization, Netzwerkfunktionsvirtualisierung), SDN (Software-defined Networking, Software-definierte Vernetzung) oder SON (Self-organizing Networks, selbstorganisierende Netzwerke). Die Management- & Instrumentierungsebene 106 nutzt dabei datenunterstützte Intelligenz, um alle Aspekte der Dienstanordnung und -bereitstellung zu optimieren.

Die hier vorgestellten Geräte, Systeme und Verfahren sind dazu vorgesehen, die Kommunikation in Kommunikationsnetzen zu verbessern, insbesondere in 5G Kommunikationsnetzen mit mehreren Netzwerk Slices (Netzwerkscheiben), wie im Folgenden beschrieben.

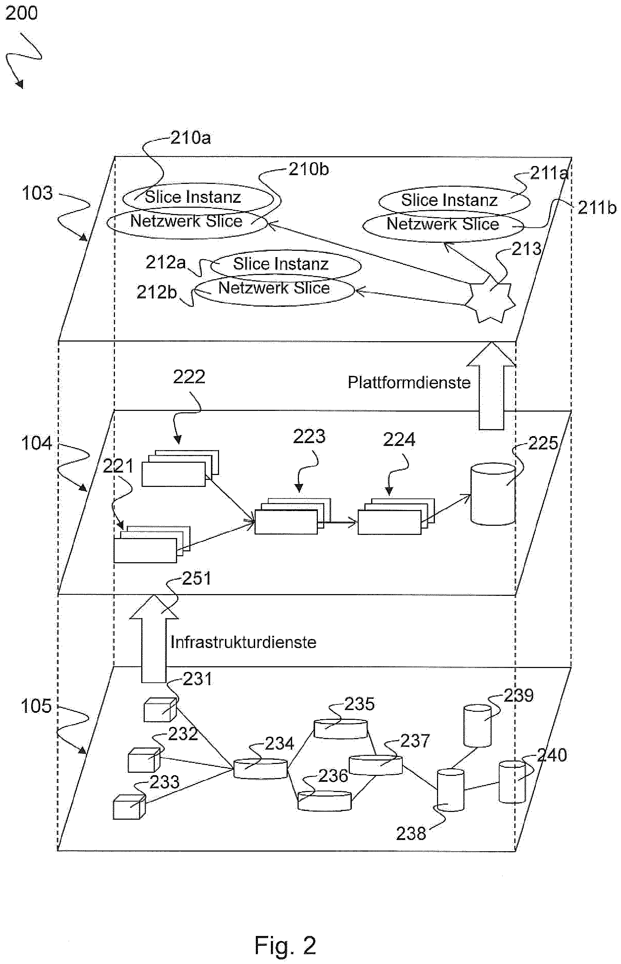

Fig. 2 zeigt eine schematische Darstellung eines 5G-Kommunikationsnetzwerks 200 mit mehreren Netzwerk Slices (Netzwerkscheiben). Das 5G-Kommunikationsnetzwerks 200 umfasst eine Infrastruktur- & Ressourcenschicht 105, eine Aktivierungsschicht 104 und eine Anwendungsschicht 103.

Die Infrastruktur- & Ressourcenschicht 105 umfasst alle physikalischen Aktiva, die einem Netzwerkbetreiber zugeordnet sind, d.h. Standorte, Kabel, Netzwerkknoten etc. Diese Schicht 105 bildet die Grundlage für alle Netzwerk Slices. Sie ist so generisch wie möglich aufgebaut ohne zu viele spezialisierte physikalische Einheiten. Die Infrastruktur- & Ressourcenschicht 105 verschleiert jede Art von anwenderspezifischer Implementierung gegenüber den oberen Schichten, so dass die verbleibenden Systeme für verschiedene Slices bestmöglich genutzt werden können. Komponenten der Infrastruktur- & Ressourcenschicht 105 basieren auf Hardware und Software bzw. Firmware, die für die jeweilige Operation benötigt wird und dabei als Infrastruktur- & Ressourcenschicht 105 den darüber liegenden Schichten als Ressourcenobjekte zu Verfügung gestellt wird. Beispielsweise umfassen Objekte der Infrastruktur- & Ressourcenschicht 105 virtuelle Maschinen, virtuelle Links bzw. Verbindungen und virtuelle Netzwerke, z.B. virtuelle Zugangsknoten 231, 232, 233, virtuelle Netzwerkknoten 234, 235, 236, 237 und virtuelle Computerknoten 238, 239, 240. Wie der Begriff "virtuell" bereits sagt, stellt die Infrastruktur- & Ressourcenschicht 105 die Objekte in der Form einer "Infrastruktur als Dienst" 251, d.h. in einer abstrahierenden, virtualisierten Form der nächsthöheren Schicht 104 zur Verfügung.

Die Aktivierungsschicht 104 ist oberhalb der Infrastruktur- & Ressourcenschicht 105 angeordnet. Sie nutzt die Objekte der Infrastruktur- & Ressourcenschicht 105 und fügt diesen zusätzliche Funktionalität in Form von Software Objekten /VNFs hinzu um das Erzeugen von jeder Art von Netzwerk Slices zu ermöglichen und so eine Plattform als Dienst der nächsthöheren Schicht 103 bereitzustellen.

Softwareobjekte können in jeder Granularität existieren, und ein winziges oder ein sehr großes Fragment eines Netzwerk-Slice umfassen. Um die Erzeugung von Netzwerk Slices auf einem geeigneten Abstraktionslevel zu erlauben können in der Aktivierungsschicht 104 verschiedene abstrahierte Objekte 221 mit anderen abstrahierten Objekten und mit virtuellen Netzwerkfunktionen 222 kombiniert werden, um kombinierte Objekte 223 zu bilden, die in aggregierte Objekten 224 überführt werden können und in einer Objektbibliothek 225 der nächsthöheren Ebene zur Verfügung gestellt werden. Damit kann die Komplexität hinter den Netzwerk Slices verborgen werden. Beispielsweise kann ein Nutzer einen mobilen Breitband-Slice erzeugen und dabei lediglich KPI (Key Performance Indikator) definieren ohne dabei spezifische Features wie individuelle lokale Antennenbedeckung, Backhaul-Verbindungen und spezifische Parametrisierungsgrade spezifizieren zu müssen. Um eine offene Umgebung zu unterstützen und es zu erlauben, Netzwerkfunktionen auf Anforderung hinzuzufügen oder zu löschen, ist eine wichtige Fähigkeit der Aktivierungsschicht 104, dass sie die dynamische Umordnung von Funktionen und Konnektivitäten in einem Netzwerk Slice unterstützt, z.B. durch Verwendung von SFC ("Service Function Chaining" = Dienstfunktionenverkettung) oder modifizierender Software, so dass die Funktionalität eines Slice vollständig vordefiniert werden kann und sowohl näherungsweise statische Softwaremodule als auch dynamisch hinzufügbare Softwaremodule umfassen kann.

Ein Netzwerk Slice kann dabei als software-definierte Entität betrachtet werden, die auf einem Satz von Objekten basiert, welche ein vollständiges Netzwerk definieren. Die Aktivierungsschicht 104 spielt für den Erfolg dieses Konzepts eine Schlüsselrolle da sie alle Softwareobjekte umfasst kann, die notwendig sind, um die Netzwerk Slices und die entsprechenden Fertigkeiten zum Handhaben der Objekte bereitzustellen. Die Aktivierungsschicht 104 kann als eine Art von Netzwerk-Betriebssystem betrachtet werden komplementiert durch eine Netzwerkerzeugungsumgebung. Eine Aufgabe der Aktivierungsschicht 104 ist das Definieren der entsprechenden Abstraktionsebenen. So haben Netzwerkbetreiber ausreichend Freiraum um ihre Netzwerk Slices zu designen während der Plattform-Betreiber immer noch die physikalischen Knoten instand halten und optimieren kann. So wird beispielsweise die Ausführung der alltäglichen Aufgaben wie das Hinzufügen oder Ersetzen von NodeBs etc. ohne das Einschreiten der Netzwerkkunden unterstützt. Die Definition geeigneter Objekte, welche ein vollständiges Telekommunikationsnetz modellieren, ist eine der wesentlichen Aufgaben der Aktivierungsschicht 104 beim Entwickeln der Netzwerk Slices Umgebung.

Ein Netzwerk Slice, auch als 5G Slice bezeichnet unterstützt die Kommunikationsdienste eines bestimmten Verbindungstyps mit einer bestimmten Art der Handhabung der C (Control bzw. Steuerungs-) und U-(User Data bzw. Nutzerdaten) Schicht. Ein 5G Slice setzt sich zusammen aus einer Sammlung von verschiedenen 5G Netzwerkfunktionen und spezifischen Funkzugangstechnologie- (RAT) Einstellungen, die zusammen kombiniert werden zum Nutzen des spezifischen Anwendungsfalls bzw. Use Case. Daher kann ein 5G Slice alle Domänen des Netzwerks umspannen, z.B. Softwaremodule, die auf Cloud-Knoten laufen, spezifische Konfigurationen des Transportnetzwerks, die eine flexible Lokation der Funktionen unterstützen, eine bestimmte Funkkonfiguration oder selbst eine bestimmte Zugangstechnologie so gut wie einer Konfiguration der 5G Geräte. Nicht alle Slices enthalten dieselben Funktionen, einige Funktionen die heute als wesentlich erscheinen für eine mobiles Netzwerk können sogar in einigen Slices nicht vorkommen. Die Intention des 5G Slice ist es, nur die Funktionen bereitzustellen, die für den spezifischen Use Case notwendig sind und alle anderen unnötigen Funktionalitäten zu vermeiden. Die Flexibilität hinter dem Slice Konzept ist der Schlüssel sowohl für das Ausweiten existierender Anwendungsfälle als auch für das Erzeugen neuer Anwendungsfälle. Drittpartei-Geräten kann damit Erlaubnis gewährt werden, bestimmte Aspekte des Slicing über geeignete APIs zu steuern, um so maßgeschneiderte Dienste bereitstellen zu können.

Die Anwendungsschicht 103 umfasst alle erzeugten Netzwerk Slices 210b, 211b, 212b und bietet diese als "Netzwerk als Service" verschiedenen Netzwerknutzern, z.B. verschiedenen Kunden an. Das Konzept erlaubt die Wiederbenutzung von definierten Netzwerk Slices 210b, 211b, 212b für verschiedene Anwender, z.B. Kunden, beispielsweise als eine neue Netzwerk Slice Instanz 210a, 211a, 212a. D.h. ein Netzwerk Slice 210b, 211b, 212b, welcher beispielsweise einer Automotive Anwendung zugeordnet ist, kann auch für Anwendungen verschiedener anderer industrieller Anwendungen genutzt werden. Die Slices Instanzen 210a, 211a, 212a, die von einem ersten Anwender erzeugt wurden, können beispielsweise unabhängig von den Slice Instanzen sein, die von einem zweiten Anwender erzeugt wurden, und das obwohl die gesamte Netzwerk Slice Funktionalität dieselbe sein kann.

Die Slices 210b, 211b, 212b formen Ausführungsbeispiele von Subnetzwerken eines Kommunikationsnetzwerks.

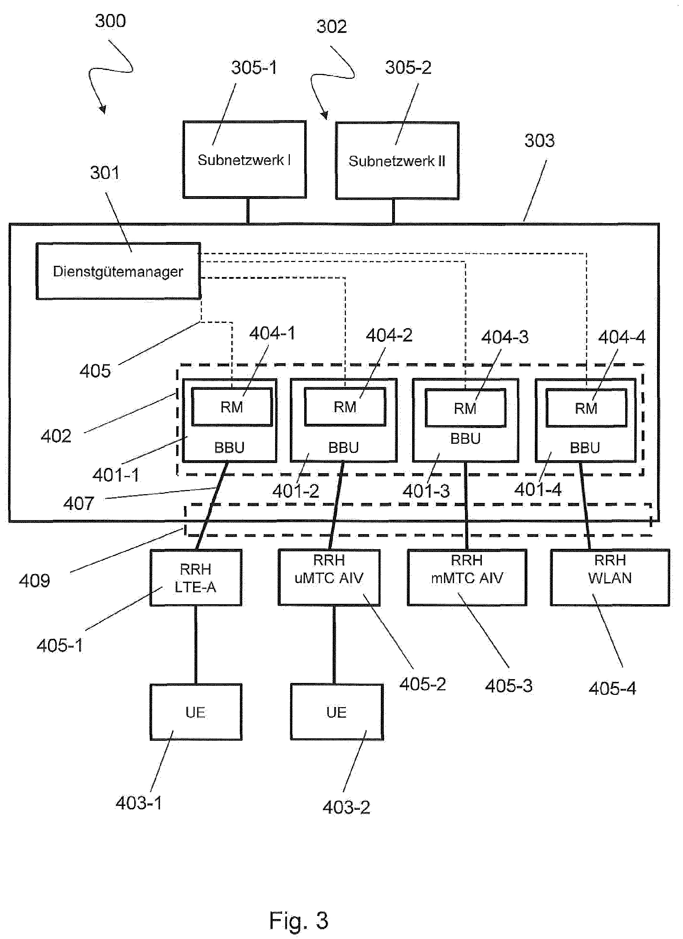

Fig. 3 zeigt eine Kommunikationsanordnung 303 in einem Kommunikationssystem 300, wobei an die Kommunikationsanordnung 303 eine Mehrzahl von Subnetzwerken 305, mit einem ersten Subnetzwerk 305-1 und mit einem Subnetzwerk 305-2, eines Kommunikationsnetzwerks 302 angeschaltet ist, wobei jedem Subnetzwerk 305 eine vorgegebene Dienstgüteklasse gemäß einer Dienstgütevereinbarung zugeordnet ist.

Die Kommunikationsanordnung 303 bildet eine zentrales Zugangs- bzw. Verteilungsnetzwerk umfasst einen zentralen Dienstgütemanager 301, welcher die Dienstgüteklassen der Subnetzwerke 305-1, 305-2 verwaltet.

Die Kommunikationsanordnung 303 umfasst ferner eine Mehrzahl von steuerbaren Basisbandeinheiten 401-1 bis 401-4 für Kommunikationen über die Subnetzwerke 305 mit den Dienstgüteklassen, welche den Subnetzwerken 305 zugeordnet sind, wobei jede Basisbandeinheit 401-1 bis 401-4 steuerbare Kommunikationsressourcen aufweist.

Die Basisbandeinheiten 401 können separate Basisbandeinheiten sein. Die Basisbandeinheiten 401 können ferner zu einem Pool 402 von Basisbandeinheiten 401 zusammengefasst werden. Die Basisbandeinheiten 401 können ferner mittels einer übergeordneten Basisbandentität implementiert werden. Die Basisbandeinheiten 401 verteilen die Datenverkehre zu oder von den Subnetzwerken 305.

Der zentralen Dienstgütemanager 301 ist ausgebildet, die Kommunikationsressourcen der Mehrzahl der Basisbandeinheiten 401 gemäß den Dienstgüteklassen der Subnetzwerke 305 zu steuern.

Zur Steuerung von Kommunikationsressourcen können die Basisbandeinheiten 401 Ressourcen-Manager 404, 404-1 bis 404-4, aufweisen. Die Ressourcen-Manager 404 können beispielsweise Scheduler sein, um Zeitlagen und/oder Anzahl von Zeitschlitzen den Datenverkehren der Subnetzwerke 305 zuzuweisen. Die Ressourcen-Manager 404 können jedoch ausgebildet sein, den Datenverkehren unterschiedliche Frequenzspektren oder Bandbreiten oder Latenzzeiten zuzuweisen, um die Anforderungen an die Dienstgüteklassen zu erfüllen.

Zur Steuerung der Kommunikationsressourcen der Mehrzahl der Basisbandeinheiten 401 bzw. zur Steuerung der Ressourcen-Manager 404-1 bis 404-4 sind Steuerleitungen 405 vorgesehen. Der Dienstgütemanager kann über die Steuerleitungen 405 Steuersignale, Steuerparameter bzw. Ressourcenparameter übermitteln, um die Kommunikationsressourcen der Basisbandeinheiten 401 zu steuern. Der jeweilige Steuerparameter bzw. Ressourcenparameter kann mehrere Kommunikationsressourcen definieren, beispielsweise Bandbreite, Datenrate, oder Frequenzspektrum.

Die Basisbandeinheiten 402 sind für Basisbandverarbeitung von Datenverkehren von bzw. zu den mobilen Endgeräten 403 (UEs) vorgesehen und beispielsweise zentral angeordnet.

Die mobilen Endgeräte 403 können an die Kommunikationsanordnung 303 über verteilte Funkzugangseinheiten 405, 405-1 bis 405-4, angebunden werden. Die Funkzugangseinheiten 405 formen ein Funkzugangsnetz und sind beispielsweise als Remote Radio Units ausgebildet und vorgesehen, Funksignale der mobilen Endgeräte 403 zu empfangen, in optische oder drahtgebundene Signale umzuwandeln und diese Signale beispielswese über Leitungen 407 an die Kommunikationsanordnung 303 zu übermitteln. Diese Übermittlung kann eine Weiterleitung sein. Die Funkzugangseinheiten 405 können jedoch Funktionen von Basisstationen übernehmen. Die Funkzugangseinheiten 405 umfassen beispielsweise Antennen für die Funkkommunikation mit den mobilen Endgeräten, und beispielswese optische Schnittstellen für die Weiterleitung der Datenverkehre an die Kommunikationsanordnung 303.

Die Kommunikationsanordnung 303 ist von den im Allgemeinen verteilten Funkzugangseinheiten 405 entfernt angeordnet. Die Funkzugangseinheiten 405 formen jedoch gemäß einer Ausführungsform zusammen mit den Basisbandeinheiten 401 Basisstationen, deren Funktionale Komponenten - Funkzugang und zumindest teilweise Basisbandverarbeitung - voneinander örtlich getrennt sind.

Die Leitungen 407 können optische Leitungen, drahtgebundene Leitungen oder Funkleitungen sein.

Die Kommunikationsanordnung 303 umfasst zum Empfang dieser Signale eine Kommunikationsschnittstelle 409, welche eine optische Schnittstelle sein kann.

Die Dienstgüteklassen geben Dienstgüten (QoS) für die Subnetzwerke 305-1, 305-2 an. Die Dienstgüteklassen können beispielsweise eine Datenrate, eine Latenzzeit, eine Bit- oder Blockfehlerrate, Frequenz- und/oder Ressourcen wie Bandbreite oder Zeitschlitze spezifizieren bzw. angeben. Die Dienstgüteklassen können gemäß einer Dienstgütevereinbarung (SLA: Service Level Agreement) für die Subnetzwerke 305 bzw. für die Datenströme der Subnetzwerke 305 definiert sein.

Die Dienstgüteklassen der Subnetzwerke 305 sind gemäß einer Ausführungsform Benutzer unabhängig. Die Subnetzwerke 305 können darüber hinaus jedoch Benutzer abhängige Dienstklassen berücksichtigen.

Der zentrale Dienstgütemanager 301 ist beispielswiese der Management- & Instrumentierungsebene 106 zugeordnet und verwaltet die Dienstgüteklassen der Subnetzwerke 305.

Die Basisbandeinheiten 401 können ferner unterschiedliche Funkzugangstechnologien (RAT: Radio Acces Technology), wie beispielsweise LTE, WLAN, WiFi, UMTS, GSM, und Funkzugangstechnologie für Machine Type Communication (MTC) unterstützen

Der Dienstgütemanager 301 hat beispielsweise eine Datenbank mit Dienstgüteklassen für die Subnetzwerke 305-1, 305-3, welche die Dienstgüten (QoS) definieren, welche in Bezug auf die Subnetzwerke 305-1, 305-3 definiert sind. Die Dienstgüten sind im Falle von 5G-Netzwerken der Management- & Instrumentierungsebene 106 oder einem Orchestrierer, welcher die Subnetzwerke 305-1, 305-3 (Slices) definiert, bekannt. Alternativ oder zusätzlich kann der Dienstgütemanager 301 die Dienstgüteklassen von einer übergeordneten Netzwerkentität wie einem Netzwerk-Orchestrierer, welcher das Kommunikationsnetzwerk 302 definiert.

Die Ressourcenmanager 404 können ausgebildet sein, die Kommunikationsressourcen der jeweiligen Basisbandeinheit 401 für da jeweilige Subnetzwerk 305 einzustellen. So kann beispielsweise durch den Ressourcenmanager 404-1 der ersten Basisbandeinheit 401-1 dem ersten Subnetzwerk 305-1 mehr Kommunikationsressourcen, beispielswese mehr Bandbreite oder Datenrate, zugewiesen werden als dem zweiten Subnetzwerk 305-2.

Gemäß einer Ausführungsform kann der Dienstgütemanager 301 Funkzugangsressourcen, welche physikalisch den Kommunikationsressourcen entsprechen können, der Funkzugangseinheiten 405 steuern. Hierzu kann der Dienstgütemanager 301 Steuersignale an die Funkzugangseinheiten 405 übermitteln, welche die einzustellenden Funkzugangsressourcen für den jeweiligen Datenverkehr bzw. für das jeweilige Subnetzwerk 305 anzeigen. Der Steuerparameter kann mehrere Funkressourcen definieren, beispielsweise Bandbreite, Datenrate, oder Frequenzspektrum. Diejenigen Funkzugangsressourcen, welche durch den Steuerparameter nicht definiert sind, werden mit einer vorgegebenen Einstellung, beispielsweise Sendeleistung, bereitgestellt. Hierzu können die Funkzugangseinheiten steuerbare Ressourcen-Manager aufweisen.

Die jeweilige Basisbandeinheit 401 kann ferner eine Ressourcennachricht an den zentralen Dienstgütemanager 301 übermitteln, wobei die Ressourcennachricht beispielswiese die Verfügbarkeit von Kommunikationsressourcen der ersten Basisbandeinheit 401-1 für eine Kommunikationsverbindung des ersten Subnetzwerks 305-1 mit der vereinbarten Dienstgüteklasse anzeigt.

Verfügt die erste Basisbandeinheit 401-1 über ausreichend Kommunikationsressourcen für die geforderte Dienstgüteklasse, so wird die Kommunikationsverbindung aufgebaut oder aufrechterhalten.

Zeigt die Ressourcennachricht jedoch an, dass die Basisbandeinheit 401-1 nicht genügend Kommunikationsressourcen für die Einhaltung der geforderten Dienstgüteklasse für das erste Subnetzwerk 305-1 aufweist, so kann der zentrale Dienstgütemanager 301 eine zweite Funkzugangseinheit auswählen und eine Übergabe der Kommunikationsverbindung bzw. des Datenverkehrs zu der weiteren Funkzugangseinheit, beispielsweise der Basisbandeinheit 401-2, initiieren.

Die Übergabe der Kommunikationsverbindung kann jedoch in Abhängigkeit von einer Wahl einer für einen Datenstrom effizienteren Funkzugangstechnologie oder von einem Optimierungsparameter, beispielsweise wie vorgenannt, erfolgen.

Die zweite Basisbandeinheit 401-2 kann vor der Einleitung der Übergabe der Kommunikationsverbindung in vorstehend beschriebener Weise ebenfalls ein Ressourcensignal an den zentralen Dienstgütemanager 301 übermitteln. Zeigt das Ressourcensignal an, dass die zweite Basisbandeinheit 401-3 ausreichend Ressourcen für die Einhaltung der Dienstgüteklasse für das erste Subnetzwerk 305-1 aufweist, so wird die Kommunikationsverbindung über die zweite Funkzugangseinheit 401-2 geführt. Hierbei können auch unterschiedliche Kommunikationstechnologien zum Einsatz kommen.

Gemäß einer Ausführungsform hat das Ressourcen Management in der Management- & Instrumentierungsebene 106, insbesondere der zentrale Dienstgütemanager 301, Kenntnis von den SLAs für die Subnetzwerke 305, in welchen die DienstgüteAnforderungen von Datenströmen, welche den Subnetzwerken 305-1, 305-2 zugeordnet sind, sowie ggf. den Funkkanaleigenschaften im Funkzugangsnetz. Basierend auf dieser Information kann der zentrale Dienstgütemanager 301 entscheiden, welcher Datenstrom über welche Basisstation sowie Funkzugangstechnologie übertragen werden soll (Datenstromsteuerung). Falls beispielsweise nicht alle QoS-Anforderungen erfüllt werden können, kann der zentrale Dienstgütemanager 301 entscheiden, den jeweiligen Datenstrom über diejenige Funkzugangstechnologie und/oder Funkzugangseinheit zu führen, welche eine nächstniedrigere Dienstgüteklasse garantieren. Auf diese Weise wird einer starken Degradierung der Dienstgüte entgegengewirkt.

Die Dienstgüteklasse kann beispielsweise angeben, dass einem Subnetzwerk 95% der Kommunikationszeit mit 10 Mbps zugesichert werden.

Die Ressourcensteuerung kann beispielsweise darin bestehen, dass demjenigen Subnetzwerk 305 mit einer höheren Dienstgüteklasse gemäß einer Dienstgütevereinbarung, beispielsweise mit mehr Bandbreite, mehr Kommunikationsressourcen bzw. Funkzugangsressourcen zugewiesen werden als einem anderen Subnetzwerk mit einer geringeren Dienstgüteklasse.

## Patentansprüche

1. Kommunikationsanordnung (303) zur Steuerung von Kommunikationsressourcen in einem Kommunikationsnetzwerk (302), wobei das Kommunikationsnetzwerk (302) eine Mehrzahl von Netzwerk-Slices (305, 305-1, 305-2) aufweist,
wobei die Netzwerk-Slices (305) unterschiedlichen Diensten zugeordnet sind und dienstspezifische Datenströme mit Dienstgüteklassen führen, welche gemäß Dienstgütevereinbarungen den jeweiligen Netzwerk-Slices zugeordnet sind;
mit einer zentralen Einheit (301), welche ausgebildet ist, die Zuweisung von Kommunikationsressourcen einer Mehrzahl von steuerbaren Basisbandeinheiten (401) zu den Datenströmen der Netzwerk-Slices gemäß der Dienstgüteklassen der Netzwerk-Slices (305) zu steuern,
wobei die Basisbandeinheiten (401) zur Verarbeitung der Datenströme im Basisband und Verteilung auf die Netzwerk-Slices (305)durch Kontrolle über steuerbare Kommunikationsressourcen der Basisbandeinheiten zur Nutzung durch die dienstspezifischen Datenströme über die Netzwerk-Slices (305) eingerichtet sind,
mit verteilten Funkzugangseinheiten (405) in Form von Remote Radio Units, RRU, für einen Funkzugang von mobilen Endgeräten (403) zu dem Kommunikationsnetzwerk (302),
die zusammen mit den Basisbandeinheiten (401) Bestandteile von Basisstationen sind, mit einer Kommunikationsschnittstelle (409) für eine Kommunikation zwischen den verteilten Funkzugangseinheiten (405) und den steuerbaren Basisbandeinheiten (404),
wobei die zentrale Einheit (301) Mittel zum Auswählen von einer Basisbandeinheit aufweist für einen Datenstrom des ersten Netzwerk-Slice (305-1) mit der Dienstgüteklasse des ersten Netzwerk-Slice (305-1) aus der Mehrzahl von Basisbandeinheiten (401) in Abhängigkeit von einem Optimierungsparameter,
wobei die zentrale Einheit (301) weiter ausgebildet ist, Funkzugangsressourcen, insbesondere Bandbreite, Anzahl von Frequenz-/Zeitressourcen, Anordnung von Frequenz-/Zeitressourcen, der verteilten Funkzugangseinheiten zu steuern.

2. Kommunikationsanordnung (303) nach Anspruch 1, wobei die Kommunikationsschnittstelle (409) eine Funkschnittstelle oder eine optische Schnittstelle ist, an welche zumindest eine Glasfaser anschließbar ist.

3. Kommunikationsanordnung (303) nach einem der vorstehenden Ansprüche, wobei die zentrale Einheit (301) ausgebildet ist, einen Ressourcenparameter an zumindest eine steuerbare Basisbandeinheit (401) zu übermitteln, wobei der Ressourcenparameter zumindest eine Kommunikationsressource für eine Dienstgüteklasse des ersten Netzwerk-Slice (305-1) definiert, und wobei die steuerbare Basisbandeinheit (401) ausgebildet ist, die Kommunikationsressource gemäß dem Ressourcenparameter für eine Kommunikation über das Netzwerk-Slice (305-1) bereitzustellen.

4. Kommunikationsanordnung (303) nach Anspruch 3, wobei der zentrale Einheit (301) denjenigen Ressourcenparameter auswählt, welcher der jeweiligen Dienstgüteklasse zugeordnet ist.

5. Kommunikationsanordnung (303) nach Anspruch 3 oder 4, wobei die zentrale Einheit (301) oder zumindest eine der Basisbandeinheiten ausgebildet ist, ein Steuersignal an zumindest eine der Funkzugangseinheiten (405) zu übermitteln, um die Funkzugangseinheit (405) zu steuern, wobei der Ressourcenparameter zumindest eine der folgenden Funkzugangsressourcen definiert: Anzahl und/oder Zeit- und/oder Frequenzlage von Frequenz- und/oder Zeitressourcen für ein Netzwerk-Slice, Anzahl und/oder Zeit- und/oder Frequenzlage von Frequenz und/oder Zeitressourcen für ein mobiles Endgerät, Bandbreite, Latenzzeit, Datenrate.

6. Kommunikationsanordnung (303) nach einem der vorstehenden Ansprüche, wobei die Kommunikationsressourcen zumindest eine der folgenden Kommunikationsressourcen umfassen: Bandbreite, Frequenzspektrum, Zeitressourcen, insbesondere Anzahl von Übertragungsrahmen, Anzahl und/oder Zeitlage von Zeitschlitzen, Sendeleistung, Datenrate, Bitfehlerrate, Blockfehlerrate, Latenzzeit.

7. Kommunikationsanordnung (303) nach einem der vorstehenden Ansprüche, wobei die zentrale Einheit (301) ausgebildet ist, eine Funkzugangseinheit (405) für eine Kommunikationsverbindung des ersten Netzwerk-Slice (305-1) mit der Dienstgüteklasse des ersten Netzwerk-Slice (305-1) in Abhängigkeit von einem Optimierungsparameter auszuwählen.

8. Kommunikationsanordnung (303) nach einem der vorstehenden Ansprüche, wobei der zentrale Einheit (301) ausgebildet ist, eine Übergabe der Kommunikationsverbindung des ersten Netzwerk-Slice (305-1) von einer ersten Basisbandeinheit (401-1) zu einer zweiten Basisbandeinheit (401-2) der Mehrzahl der Basisbandeinheiten (401) in Abhängigkeit von einem Optimierungsparameter zu initiieren.

9. Kommunikationsanordnung (303) nach einem der vorstehenden Ansprüche, wobei der Optimierungsparameter zumindest einer der Optimierungsparameter ist: Verfügbarkeit von Kommunikationsressourcen und/oder Verarbeitungsressourcen der Basisbandeinheiten (401) für die jeweilige Kommunikationsverbindung mit der jeweiligen Dienstgüteklasse, Verfügbarkeit von Funkzugangsressourcen und/oder Datenverarbeitungsressourcen von Funkzugangseinheiten (405) für die jeweilige Kommunikationsverbindung mit der jeweiligen Dienstgüteklasse, Lastausgleich unter den Basisbandeinheiten oder unter Funkzugangseinheiten (405), Auswahl einer Basisbandeinheit (401) mit den geringsten Kommunikationsressourcen, welche die jeweilige Dienstgüteklasse erfüllen, Auswahl einer Funkzugangseinheit (401) mit den geringsten Funkzugangsressourcen, welche die jeweilige Dienstgüteklasse erfüllen, zulässige Degradierung einer Dienstgüteklasse gemäß der Dienstgütevereinbarung, Dienstgüteanforderungen an einen Datenstrom eines Benutzers.

10. Kommunikationsanordnung (302) nach einem der vorstehenden Ansprüche, wobei die zentrale Einheit (301) ferner ausgebildet ist, die Kommunikationsressourcen der Mehrzahl der Basisbandeinheiten (401) gemäß den Dienstgüteklassen der Netzwerk-Slices (305) und Dienstgüteklassen von Datenströmen von Benutzern zu steuern.

11. Kommunikationsanordnung (302) nach einem der vorstehenden Ansprüche, welche ferner eine Kommunikationsschnittstelle, insbesondere eine optische Kommunikationsschnittstelle, für die Kommunikation zwischen den Basisbandeinheiten (401) und den Netzwerk-Slices (305) aufweist.

12. Kommunikationsanordnung (302) nach einem der vorstehenden Ansprüche, wobei die Basisbandeinheiten (401) ausgebildet sind, einen eingehenden Kommunikationsverkehr auf die Netzwerk-Slices (305) zu verteilen.

13. Kommunikationsanordnung (302) nach einem der vorstehenden Ansprüche, wobei die Basisbandeinheiten (405) ausgebildet sind, unterschiedliche Kommunikationstechnologien zu unterstützen, insbesondere LTE, WLAN, UMTS, GSM, 5G, und Kommunikationstechnologien für Machine Type Communication (MTC).

14. Kommunikationssystem (300), mit:
der Kommunikationsanordnung (302) nach einem der vorstehenden Ansprüche; und
einer Mehrzahl von verteilten Funkzugangseinheiten (405) für Weiterleitung von Kommunikationssignalen von mobilen Endgeräten (403) zu der Kommunikationsanordnung (302), wobei die Mehrzahl von Funkzugangseinheiten (405) mit der Kommunikationsanordnung (302) über eine optische Übertragungsstrecke (407) verbindbar ist.

## Claims

1. Communication arrangement (303) for controlling communication resources in a communication network (302), wherein the communication network (302) has a plurality of network slices (305, 305-1, 305-2),
wherein the network slices (305) are associated with different services and carry service-specific data streams using quality of service classes that are associated with the respective network slices according to quality of service agreements;
having a central unit (301) configured to control the allocation of communication resources of a plurality of controllable baseband units (401) to the data streams of the network slices according to the quality of service classes of the network slices (305),
wherein the baseband units (401) are set up for processing the data streams in baseband and distribution among the network slices (305) by means of control using controllable communication resources of the baseband units for use by the service-specific data streams via the network slices (305),
having distributed radio access units (405) in the form of remote radio units, RRUs, for radio access by mobile terminals (403) to the communication network (302),
which, together with the baseband units (401), are constituent parts of base stations, with a communication interface (409) for communication between the distributed radio access units (405) and the controllable baseband units (404),
wherein the central unit (301) has means for selecting a baseband unit for a data stream of the first network slice (305-1) with the quality of service class of the first network slice (305-1) from the plurality of baseband units (401) on the basis of an optimization parameter,
wherein the central unit (301) is further configured to control radio access resources, in particular bandwidth, number of frequency/time resources, arrangement of frequency/time resources, of the distributed radio access units.

2. Communication arrangement (303) according to Claim 1, wherein the communication interface (409) is a radio interface or an optical interface to which at least one glass fibre is connectable.

3. Communication arrangement (303) according to either of the preceding claims, wherein the central unit (301) is configured to transmit a resource parameter to at least one controllable baseband unit (401), wherein the resource parameter defines at least one communication resource for a quality of service class of the first network slice (305-1), and wherein the controllable baseband unit (401) is configured to provide the communication resource according to the resource parameter for communication via the network slice (305-1).

4. Communication arrangement (303) according to Claim 3, wherein the central unit (301) selects that resource parameter that is associated with the respective quality of service class.

5. Communication arrangement (303) according to Claim 3 or 4, wherein the central unit (301) or at least one of the baseband units is configured to transmit a control signal to at least one of the radio access units (405) in order to control the radio access unit (405), wherein the resource parameter defines at least one of the following radio access resources: number and/or timing and/or frequency of frequency and/or time resources for a network slice, number and/or timing and/or frequency of frequency and/or time resources for a mobile terminal, bandwidth, latency, data rate.

6. Communication arrangement (303) according to one of the preceding claims, wherein the communication resources comprise at least one of the following communication resources: bandwidth, frequency spectrum, time resources, in particular number of transmission frames, number and/or timing of time slots, transmission power, data rate, bit error rate, block error rate, latency.

7. Communication arrangement (303) according to one of the preceding claims, wherein the central unit (301) is configured to select a radio access unit (405) for a communication connection of the first network slice (305-1) with the quality of service class of the first network slice (305-1) on the basis of an optimization parameter.

8. Communication arrangement (303) according to one of the preceding claims, wherein the central unit (301) is configured to initiate a transfer of the communication connection of the first network slice (305-1) from a first baseband unit (401-1) to a second baseband unit (401-2) of the plurality of baseband units (401) on the basis of an optimization parameter.

9. Communication arrangement (303) according to one of the preceding claims, wherein the optimization parameter is at least one of the optimization parameters: availability of communication resources and/or processing resources of the baseband units (401) for the respective communication connection with the respective quality of service class, availability of radio access resources and/or data processing resources of radio access units (405) for the respective communication connection with the respective quality of service class, load equalization among the baseband units or among radio access units (405), selection of a baseband unit (401) having the least communication resources that satisfy the respective quality of service class, selection of a radio access unit (401) having the least radio access resources that satisfy the respective quality of service class, permissible degradation of a quality of service class according to the quality of service agreement, quality of service demands on a data stream of a user.

10. Communication arrangement (302) according to one of the preceding claims, wherein the central unit (301) is further configured to control the communication resources of the plurality of baseband units (401) according to the quality of service classes of the network slices (305) and quality of service classes of data streams of users.

11. Communication arrangement (302) according to one of the preceding claims, which further has a communication interface, in particular an optical communication interface, for the communication between the baseband units (401) and the network slices (305).

12. Communication arrangement (302) according to one of the preceding claims, wherein the baseband units (401) are configured to distribute an incoming communication traffic among the network slices (305) .

13. Communication arrangement (302) according to one of the preceding claims, wherein the baseband units (305) are configured to support different communication technologies, in particular LTE, WLAN, UMTS, GSM, 5G, and communication technologies for machine type communication (MTC).

14. Communication system (300) having:
the communication arrangement (302) according to one of the preceding claims; and
a plurality of distributed radio access units (405) for forwarding communication signals from mobile terminals (403) to the communication arrangement (302), wherein the plurality of radio access units (405) are connectable to the communication arrangement (302) via an optical transmission link (407).

## Revendications

1. Agencement de communication (303), destiné à commander des ressources de communication au sein d'un réseau de communication (302), le réseau de communication (302) comportant une pluralité de tranches de réseau (305, 305-1, 305-2),
les tranches de réseau (305) étant affectées à différents services et conduisant des flux de données spécifiques aux services, pourvus de classes de qualité de service, qui sont affectées aux tranches de réseau respectives selon des accords qualitatifs de services ;
comprenant une unité centrale (301), qui est conçue pour commander l'affectation des ressources de communication d'une pluralité d'unités de bande de base (401) susceptibles d'être commandées aux flux de données des tranches de réseau selon les classes de qualité de services des tranches de réseau (305) ;
les unités de bande de base (401) étant configurées pour traiter les flux de données dans la bande de base et pour les distribuer sur les tranches de réseau (305), par contrôle via des ressources de communication susceptibles d'être commandées des unités de bande de base, pour l'exploitation via les flux de données spécifiques aux services via les tranches de réseau (305),
comprenant des unités d'accès sans fil (405) distribuées, sous la forme de Remote Radio Units, RRU pour permettre un accès sans fil de terminaux mobiles (403) au réseau de communication (302),
qui conjointement avec les unités de bande de base (401) sont des parties intégrantes de stations de base,
comprenant une interface de communication (409), permettant une communication entre les unités d'accès sans fil (405) distribuées et les unités de bande de base (404) susceptibles d'être commandées,
l'unité centrale (301) comportant des moyens destinés à sélectionner une unité de bande de base pour un flux de données de la première tranche de réseau (305-1) avec la classe de qualité de service de la première tranche de réseau (305-1) parmi la pluralité d'unités de bande de base (401), en fonction d'un paramètre d'optimisation, l'unité centrale (301) étant conçue par ailleurs pour commander des ressources d'accès sans fil, notamment la largeur de bande, le nombre de ressources fréquence/temps, l'agencement de ressources fréquence/temps, des unités d'accès sans fil distribuées.

2. Agencement de communication (303) selon la revendication 1, l'interface de communication (409) étant une interface sans fil ou une interface optique, sur laquelle peut se raccorder au moins une fibre de verre.

3. Agencement de communication (303) selon l'une quelconque des revendications précédentes, l'unité centrale (301) étant conçue pour transmettre un paramètre de ressource à au moins une unité de bande de base (401) susceptible d'être commandée, le paramètre de ressource définissant au moins une ressource de communication pour une classe de qualité de service de la première tranche de réseau (305-1) et l'unité de bande de base (401) susceptible d'être commandée étant conçue pour mettre à disposition la ressource de communication selon le paramètre de ressource pour une communication via la tranche de réseau (305-1).

4. Agencement de communication (303) selon la revendication 3, l'unité centrale (301) sélectionnant le paramètre de ressource qui est affecté à la classe de qualité de service respective.

5. Agencement de communication (303) selon la revendication 3 ou 4, l'unité centrale (301) ou au moins l'une des unités de bande de base étant conçue pour transmettre un signal de commande à au moins l'une des unités d'accès sans fil (405), pour commander l'unité d'accès sans fil (405), le paramètre de ressource définissant au moins l'une quelconque des ressources d'accès sans fil suivantes : nombre et/ou position temporelle et/ou position de fréquence de ressources de fréquence et/ou de temps pour une tranche de réseau, nombre et/ou position temporelle et/ou position de fréquence de ressources de fréquence et/ou de temps pour un terminal mobile, largeur de bande, temps de latence, taux de données.

6. Agencement de communication (303) selon l'une quelconque des revendications précédentes, les ressources de communication comprenant au moins l'une quelconque des ressources de communication suivantes : largeur de bande, spectre de fréquences, ressources temporelles, notamment nombre de cadres de transmission, nombre et/ou position temporelle de créneaux temporels, puissance d'émission, taux de données, taux d'erreurs sur les bits, taux d'erreurs sur les blocs, temps de latence.

7. Agencement de communication (303) selon l'une quelconque des revendications précédentes, l'unité centrale (301) étant conçue pour sélectionner une unité d'accès sans fil (405) pour une liaison de communication de la première tranche de réseau (305-1) avec la classe de qualité de service de la première tranche de réseau (305-1) en fonction d'un paramètre d'optimisation.

8. Agencement de communication (303) selon l'une quelconque des revendications précédentes, l'unité centrale (301) étant conçue pour initier un transfert de la liaison de communication de la première tranche de réseau (305-1) d'une première unité de bande de base (401-1) vers une deuxième unité de bande de base (401-2) de la pluralité d'unités de bande de base (401) en fonction d'un paramètre d'optimisation.

9. Agencement de communication (303) selon l'une quelconque des revendications précédentes, le paramètre d'optimisation étant au moins l'un des paramètres d'optimisation suivants : disponibilité de ressources de communication et/ou de ressources de traitement des unités de bande de base (401) pour la liaison de communication respective avec la classe de qualité de service respective, disponibilité de ressources d'accès sans fil et/ou de ressources de traitement de données d'unités d'accès sans fil (405) pour la liaison de communication respective avec la classe de qualité de service respective, équilibrage des charges sous les unités de bande de base ou sous les unités d'accès sans fil (405), sélection d'une unité de bande de base (401) disposant des ressources de communications les plus faibles, qui satisfont à la classe de qualité de service respective, sélection d'une unité d'accès sans fil (401) disposant des ressources d'accès sans fil les plus faibles, qui satisfont à la classe de qualité de service respective, dégradation admissible d'une classe de qualité de service selon l'accord qualitatif de service, exigences en matière de qualité de service pour un flux de données d'un abonné.

10. Agencement de communication (302) selon l'une quelconque des revendications précédentes, l'unité centrale (301) étant conçue par ailleurs pour commander les ressources de communication de la pluralité d'unités de bande de base (401) selon les classes de qualité de service des tranches de réseau (305) et des classes de qualité de service de flux de données d'abonnés.

11. Agencement de communication (302) selon l'une quelconque des revendications précédentes, lequel comporte par ailleurs une interface de communication, notamment une interface de communication optique pour la communication entre les unités de bande de base (401) et les tranches de réseau (305).

12. Agencement de communication (302) selon l'une quelconque des revendications précédentes, les unités de bande de base (401) étant conçues pour distribuer un trafic de communication entrant sur les tranches de réseau (305).

13. Agencement de communication (302) selon l'une quelconque des revendications précédentes, les unités de bande de base (405) étant conçues pour prendre en charge différentes technologies de communication, notamment LTE, WLAN, UMTS, GSM, 5G et des technologies de communication pour Machine Type Communication (MTC).

14. Système de communication (300), comprenant :
l'agencement de communication (302) selon l'une quelconque des revendications précédentes ; et
une pluralité d'unités d'accès sans fil (405) distribuées, destinées à retransmettre des signaux de communication de terminaux mobiles (403) vers l'agencement de communication (302), la pluralité d'unités d'accès sans fil (405) étant susceptible d'être reliée avec l'agencement de communication (302) via un trajet de transmission optique (407).
